**Europäisches Patentamt**

**European Patent Office**

**Office européen des brevets**

(11) Veröffentlichungsnummer: **0 092 634**

**A1**

(12) **EUROPÄISCHE PATENTANMELDUNG**

(21) Anmeldenummer: **83100275.3**

(22) Anmeldetag: **14.01.83**

(51) Int. Cl.³: **B 23 B 5/26**

(30) Priorität: **24.04.82 DE 3215394**

(43) Veröffentlichungstag der Anmeldung:
**02.11.83 Patentblatt 83/44**

(84) Benannte Vertragsstaaten:
**CH DE GB IT LI**

(71) Anmelder: **GOETZE AG**
**Bürgermeister-Schmidt-Strasse 17**
**D-5093 Burscheid 1(DE)**

(72) Erfinder: **Comberg, Gerd, Dipl.-Ing.**
**Burscheider Strasse 325**
**D-5090 Leverkusen 3(DE)**

(72) Erfinder: **Hirschfeld, Günter, Dipl.-Ing.**
**Füllsichel 47**
**D-5093 Burscheid(DE)**

(72) Erfinder: **Lückger, Rolf**
**Ginsterweg 16 a**
**D-5000 Köln 91(DE)**

(72) Erfinder: **Neumaier, Hans**
**Deuter Strasse 17 B**
**D-8902 Neusäss(DE)**

(54) **Maschine für die Umfangsbearbeitung.**

(57) Bei einer Maschine für die Unrundbearbeitung setzt sich die Zustellung des oder der Werkzeugträger aus einer Überlagerung einer Sinus - oder sinusförmigen Grundbewegung (17) sowie einer dieser additiv überlagerten Zusatzbewegung (18) zusammen, wobei letztere der jeweiligen definierten Differenz zwischen der zu erzeugenden Unrundkontur (16) und der Grundbewegung (17) entspricht. Der Verlauf der Grundbewegung (17) weist ensprechend der symmetrischen Form der zu erzeugenden Unrundkontur (16) die doppelte Frequenz derselben auf.

FIG. 2

EP 0 092 634 A1

- 1 -

Maschine für die Umfangsbearbeitung.

Die Erfindung betrifft eine Maschine für die Unrundbearbeitung insbesondere von Kolbenringen, bestehend aus einer das Werkstückpaket tragenden Arbeitsspindel sowie mindestens einem entsprechend der Unrundkontur des Werkstückes zustellbaren Werkzeugträger beziehungsweise Werkzeug, dessen Zustellung in Richtung auf das Werkstück durch Überlagerung mehrerer einzelner Zustellbeträge erfolgt.

Durch die DE - PS 2.732.354 ist bereits eine Drehmaschine für die Unrundbearbeitung insbesondere von Kolbenringen bekannt, wobei der Werkzeugträger durch numerisch ansteuerbare Stellmotoren verschiebbar ist. Diese sind bezüglich ihrer Winkelschrittgröße unterschiedlich ausgelegt. Nachteilig an der bekannten Drehmaschine ist, daß bei höheren Drehzahlen, die zur Verbesserung der Wirtschaftlichkeit anzustreben sind, Konturungenauigkeiten, insbesondere beim Doppelformdrehen, auftreten. Diese werden hauptsächlich durch dynamische Störkräfte verursacht, die im Lageregelkreis zu Abweichungen des Lageistwertes des oder der Werkzeuge von der aus dem Datenspeicher vorgegebenen Sollposition führen. Die angeführten Ungenauigkeiten sind vor allem bedingt durch das Abbremsen und Beschleunigen der Stellmotoren. Insbesondere bei der Bearbeitung von Kolbenringen müssen die Stellmotoren während einer Werkstückumdrehung viermal die Drehrichtung ändern, woraus relativ hohe Winkelbeschleunigungen auftreten.

Des weiteren ist durch die DE - OS 2.006.760 eine Unrunddreheinrichtung für Drehmaschinen bekannt, bei welcher das Werkzeug in Abhängigkeit vom Drehwinkel eines mit der Arbeitsspindel rotierenden Werkstückes in radialer Richtung zustellbar ist. Die Zustellung erfolgt dabei durch den Gebrauch von mindestens zwei parallel nebeneinander angeordneter Stellmotoren, deren einzelne Stellgrößen in einem Koppelgetriebe einander überlagert und dann auf den Werkzeugträger übertragen werden. Die Stellmotoren sind über relativ komplizierte und damit teure und störungsanfällige Getriebestufen miteinander verbunden. Außerdem ist diese Einrichtung nicht darauf ausgelegt, größere Wegstrecken mit besonders erhöhter Geschwindigkeit zu durchfahren.

Der Erfindung liegt die Aufgabe zugrunde, eine Drehmaschine zur Unrundbearbeitung von Werkstückumfangsflächen zu schaffen, bei der das Unrunddrehsystem zur Verkleinerung der Ungenauigkeit bei bestimmten Drehzahlen beziehungsweise zur Erhöhung der Spindeldrehzahl außer einer Reduzierung aller am Bewegungsablauf beteiligten Massenträgheitsmomente und einer Steifigkeitserhöhung vor allem eine Verkleinerung der im Lageregelkreis wirkenden Wege, Geschwindigkeiten und Beschleunigungen bewirkt.

Diese Aufgabe wird erfindungsgemäß gelöst durch eine der zu erzeugenden Unrundkontur angenäherte Sinus - oder sinusähnliche Grundbewegung sowie eine dieser additiv überlagerten Zusatzbewegung, die der jeweiligen definierten Differenz zwischen der zu erzeugenden Unrundkontur und der Grundbewegung entspricht. Bei der relativ geringen Abweichung der zu erzeugenden Unrundkontur, insbesondere bei Kolbenringen, von einer geeigneten Basiskontur ( zum Beispiel Sinuskontur ) hat dieses System gegenüber dem Stnad der Technik den Vorteil, daß nur relativ kleine Korrekturzustellwege erforderlich sind, die wiederum zu minimalen

- 3 -

Beschleunigungs - beziehungsweise Verzögerungswerten führen. Dies läßt eine höhere Werkstückspindeldrehzahl zu, was einer erhöhten Maschinenleistung gleichkommt.

Vorzugsweise weist der Verlauf der Grundbewegung entsprchend der symmetrischen Form der zu erzeugenden Unrundkontur die doppelte Frequenz derselben auf. Das heißt, bei einer Umdrehung der Arbeitsspindel vollführt der Antrieb für die Grundbewegung des beziehungsweise der Werkzeugträger beziehungsweise Werkzeuge zwei Umdrehungen, wobei die Grundbewegung bereits eine große Annäherung an die jeweils gewünschte Unrundkontur bewirkt.

Es wird weiterhin vorgeschlagen, daß die Grundbewegung mechanisch durch ein an sich bekanntes Koppelgetriebe ( Kurbel, Kurbelschleife oder dergleichen ) und die Zusatzbewegung elektronisch ( numerisch ) ausführbar ist. Die Grundbewegung ( zum Beispiel Sinuskurve ) hat einen maximalen Weg vom unteren bis zum oberen Totpunkt, der bei Kolbenringen der Differenz der größten und kleinsten Radien der Ringe entspricht. Die Zusatzbewegung wird zum Beispiel erreicht durch asymmetrische Bewegung ( Winkelgeschwindigkeit inkonst. ) eines regelbaren Antriebes, die der doppelten Spindeldrehzahl entspricht. Die radial notwendige Wegkorrektur kann zum Beispiel durch Vor - und Nacheilen des Kurbeldrehwinkels der Grundbewegung gegenüber dem zugehörigen Werkstückspindeldrehwinkel erreicht werden. Der Kurbelantriebsmotor wird hierbei vorzugsweise über ein elektronisches Regelsystem angesteuert, wobei sich der Drehsinn des Kurbelmotors nicht ändert. Dabei können die Veränderungen der Winkelgeschwindigkeit durch elektronische Beeinflussung

- 4 -

des Grundbewegungsantriebes direkt ( zum Beispiel durch Änderung der Form der Kurbelglieder ) oder durch Überlagerung des mit konstanter Drehzahl umlaufenden Grundantriebes ( zum Beispiel mittels eines Planetengetriebes ) mit einem numerischen, die jeweils erforderlichen Korrekturwerte übertragenden Zusatzantrieb vorgenommen werden.

Wesentliche Vorteile dieser Ausführung gegenüber bekannten Systemen sind folgende:

Da der elektronische Teil nur eine Korrekturfunktion übernimmt, können hohe Drehzahlen und somit hohe Schnittgeschwindigkeiten erzielt werden, jede Ringkontur ist herzustellen, kurze Rüstzeiten, da lediglich die Unrundheit des jeweiligen Ringes entsprechend an der Kurbel eingestellt wird, einfache Berichtigung der Ringkontur.

Einem weiteren Gedanken der Erfindung gemäß erfolgt die additive Überlagerung der positiven und negativen Zustellwerte durch elektromechanische oder hydraulische Mittel, die der Grundbewegung vor - oder nachgeschaltet sind.

Wird der Antrieb der Grundbewegung mechanisch von der Arbeitsspindel unter Berücksichtigung der bereits angesprochenen Übersetzung von 1 : 2 abgeleitet, wird dadurch auf einfache und sichere Weise die zwingend notwendige Synchronisation zwischen der Drehung der Arbeitsspindel und dem Bewegungsablauf des beziehungsweise der Bearbeitungswerkzeuge erreicht. Vorzugsweise ist die Zusatzbewegung der Grundbewegung gleichgeschaltet, so daß auch sie der doppelten Spindeldrehzahl entspricht.

BAD ORIGINAL

. 5 -

Weiterhin besteht die Möglichkeit, daß sowohl die Grund - als auch die Zusatzbewegung durch mindestens einen elektronisch steuer - beziehungsweise regelbaren Antrieb erfolgt.

Die Erfindung ist in der Zeichnung dargestellt und wird im folgenden näher beschrieben. Es zeigt:

Figur 1  Prinzipskizze einer Ausführungsform der Unrunddreheinrichtung

Figur 2  Darstellung der unterschiedlichen Kurven.

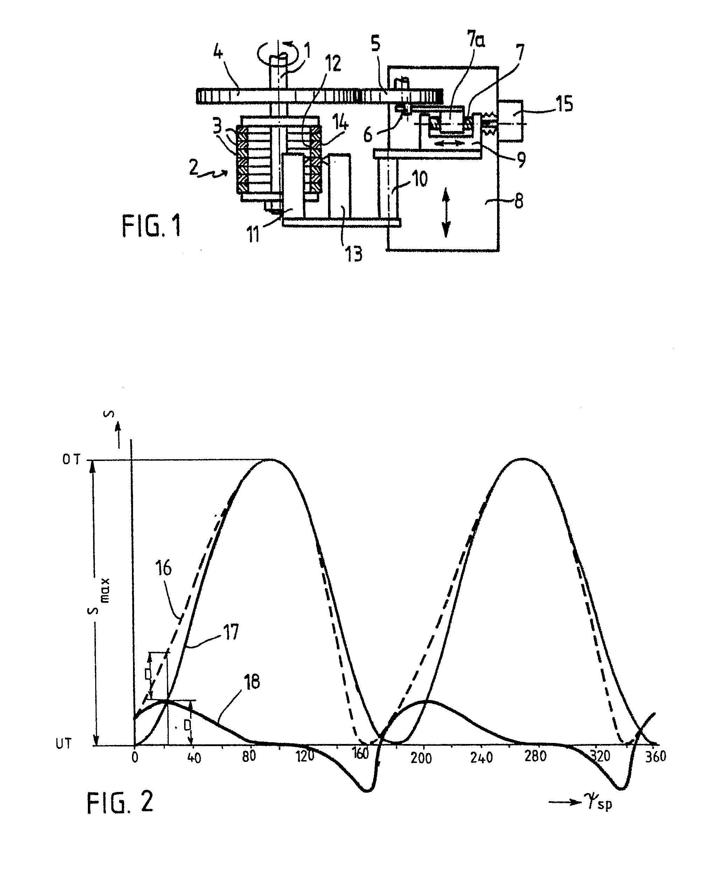

Figur 1 stellt als Prinzipskizze ein Beispiel der erfindungsgemäßen Undrunddreheinrichtung dar. Die angedeutete Hauptspindel 1, die das Werkstückpaket 2, welches sich aus einer Vielzahl von Kolbenringen 3 zusammensetzt, trägt, ist mit einem Zahnrad 4 bestückt. Dieses kämmt mit einem weiteren Zahnrad 5 im Verhältnis 2 : 1. Die Abtriebsdrehzahl des zweiten Zahnrades 5 dient als Antrieb für eine Kurbel 6, die wiederum auf eine  kippbare   · angeordnete Mutter 7a eines bekannten Gewindetriebes 7 wirkt. Zur Bearbeitung des Werkstückpaketes 2 ist ein Längsschlitten 8 vorgesehen, auf welchem ein radial zustellbarer Querschlitten 9 angeordnet ist. Die radiale Zustellung des Querschlittens 9 erfolgt einerseits zur Erzeugung der Grundbewegung und andererseits zur Erzeugung der Zusatzbewegung durch die am Gewindetrieb 7 und 7a eingreifende Kurbel 6, die von dem am Querschlitten 9 angebrachten regelbaren Gleichstrommotor 15 angetrieben wird. Am Querschlitten ist weiterhin eine Schwinge 10 befestigt, die sowohl das Werkzeug 11 für die Bearbeitung der inneren 12 als auch das Werkzeug 13 für die Bearbeitung der äußeren Umfangsfläche 14 trägt, sofern die Werkzeuge 11,13 nicht in fester Ver-

- 6 -

bindung mit dem Querschlitten 9 angeordnet sind.

Der Arbeitsablauf stellt sich etwa wie folgt dar:

Nachdem das Werkzeugpaket 2 aufgespannt und in Rotation versetzt worden ist, wird der Längsschlitten 8 in axialer Richtung zum Werkzeugpaket 2 bewegt. Da im vorliegenden Fall eine feste Verbindung durch die beiden Zahnräder 4 und 5 ( die gegebenenfalls auch durch eine Kupplung getrennt werden könnte ) gegeben ist, führt gleichzeitig auch der Querschlitten mit der doppelten Frequenz der Arbeitsspindel durch die zwischengeschaltete Kurbel 6 eine sinusförmige Grundbewegung in radialer Richtung aus, die über die Gewindespindel 7 auf der Querschlitten 9 und somit letztendlich auch auf die Bearbeitungswerkzeuge 11,13 übertragen wird. Der Sinus - oder auch sinusähnliche Verlauf der Grundbewegung wurde gewählt, weil durch diese Form der Bewegung eine relativ große Annäherung an die Form der paketierten Kolbenringe 3 erreicht wird. Dieser Grundbewegung wird nun eine Zusatzbewegung überlagert, und zwar durch den mit dem Querschlitten 9 gleichfalls verbundenen regelbaren Gleichstrommotor 15 über die im Querschlitten 9 drehbar gelagerte Gewindespindel 7. Diese Zusatzbewegung entspricht der jeweiligen, mathematisch definierten Differenz zwischen der zu erzeugenden Unrundform der Kolbenringe 3 und der durch die Kurbel 6 ausgeführten sinusförmigen Grundbewegung.

In Figur 2 sind die unterschiedlichen Kurven in Form eines Diagrammes dargestellt, und zwar der Weg s ( Ordinate ) der Grundbewegung über den Werkstückspindeldrehwinkel $\gamma_{sp}$.

Wie schon angesprochen, weist die Kolbenringkurve 16 einen etwa sinusförmigen Verlauf auf. Die Grundbewegung ( Sinuskurve ) 17 hat einen maximalen Weg s vom oberen Totpunkt OT bis zum unteren Totpunkt UT, der der Differenz der größten und kleinsten Radien der zu bearbeitenden Kolbenringe entspricht. Dieser Grundbewegung 17 wird eine Zusatzbewegung 18 überlagert, die der jeweiligen, mathematisch definierten Differenz D zwischen der zu erzeugenden Unrundkontur 16 und der Grundbewegung 17 entspricht.

Die Zusatzbewegung wird zum Beispiel numerisch erzeugt, wobei deren Ordinatenwerte in Abhängigkeit von Form und Größe der zu erzeugenden Unrundkontur und der Größe der gewählten Grundbewegung errechnet und gespeichert werden. Die Zusatzbewegung 18 zeichnet sich durch erheblich kleinere zu verfahrende Wege, Geschwindigkeiten und insbesondere Beschleunigungen aus im Vergleich zu den Wegen, Geschwindigkeiten und Beschleunigungen der zu erzeugenden Unrundkontur 16, da die Grundbewegung 17 bereits eine große Annäherung zu dieser darstellt.

Die vorab angesprochene Lösung stellt lediglich eine mögliche Variante dar. Die additive Überlagerung der positiven und negativen Ordinatenwege der Zusatzbewegung kann ebenso durch geeignete elektromechanische, hydraulische oder sonstige Mittel erfolgen, die der Grundbewegung vor - oder nachgeschaltet sind. Sie kann auch in die Grundbewegungselemente integriert sein, wie zum Beispiel durch Mechanismen, die die Länge von Kurbelarmen, Pleuelstangen oder dergleichen verändern.

- 1 -

Patentansprüche:

1. Maschine für die Unrundbearbeitung insbesondere von Kolbenringen, bestehend aus einer das Werkstückpaket tragenden antreibbaren Arbeitsspindel sowie mindestens einem entsprechend der Unrundkontur des Werkstückes zustellbaren Werkzeugträger, dessen Zustellung in Richtung auf das Werkstück durch Überlagerung mehrerer einzelner Zustellbeträge erfolgt, gekennzeichnet durch eine der zu erzeugenden Unrundkontur angenäherte Sinus - oder sinusförmige Grundbewegung ( 17 ) sowie eine dieser additiv überlagerten Zusatzbewegung ( 18 ), die der jeweiligen definierten Differenz zwischen der zu erzeugenden Unrundkontur ( 16 ) und der Grundbewegung ( 17 ) entspricht.

2. Maschine nach Anspruch 1, dadurch gekennzeichnet, daß der Verlauf der Grundbewegung ( 17 ) entsprechend der symmetrischen Form der zu erzeugenden Unrundkontur ( 16 ) die doppelte Frequenz derselben aufweist.

3. Maschine nach den Ansprüchen 1 und 2, dadurch gekennzeichnet, daß die Grundbewegung ( 17 ) mechanisch durch ein an sich bekanntes Koppelgetriebe ( 6 ) und die Zusatzbewegung ( 18 ) elektronisch ( numerisch ) ausführbar ist.

4. Maschine nach den Ansprüchen 1 und 2, dadurch gekennzeichnet, daß die additive Überlagerung der positiven und negativen Zustellwerte durch elektromechanische oder hydraulische Mittel erfolgt.

2 -

5 . Maschine nach den Ansprüchen 1 und 2, dadurch gekennzeichnet, daß sowohl die Grund - ( 17 ) als auch die Zusatzbewegung ( 18 ) durch mindestens einen elektronisch regelbaren Antrieb ( 15 ) erzeugbar ist.

6 . Maschine nach den Ansprüchen 1 bis 5, dadurch gekennzeichnet, daß die Überlagerung von Grund - ( 17 ) und Zusatzbewegung ( 18 ) durch eine kontinuierliche Veränderung der Winkelgeschwindigkeit des Grundbewegungsantriebes erfolgt.

FIG. 1

FIG. 2

Europäisches
Patentamt

## EINSCHLÄGIGE DOKUMENTE

| Kategorie | Kennzeichnung des Dokuments mit Angabe soweit erforderlich, der maßgeblichen Teile | Betrifft Anspruch | KLASSIFIKATION DER ANMELDUNG (Int Cl ³) |
|---|---|---|---|
| D,A | DE-C-2 732 354 (GOETZE AG) * Anspruch 1; Spalte 3, Zeilen 12-19; Spalte 4, Zeile 50 - Spalte 5, Zeile 6; Figur 2 * | 1 | B 23 B 5/26 |
| D,A | DE-A-2 006 760 (GILDEMEISTER & CO. AG) * Anspruch 1; Seite 2, Zeilen 16-29 * | 1 | |
| A | DE-C- 918 910 (K. SCHMIDT GMBH) * Anspruch 1; Seite 2, Zeilen 88-108; Figur * | 1,2 | |
| A | DE-C-1 045 204 (GOETZE AG) * Spalte 4, Zeilen 8-35; Figur 2 * | 1 | |
| A | DE-A-2 908 383 (GOETZE AG) * Seite 3, Zeilen 14-17; Seite 5, Zeilen 10-28; Figuren 1-3 * | 1 | |

RECHERCHIERTE SACHGEBIETE (Int Cl ³)

B 23 B 5/00
B 23 Q 27/00
B 24 B 19/11

Der vorliegende Recherchenbericht wurde für alle Patentansprüche erstellt

| Recherchenort BERLIN | Abschlußdatum der Recherche 30-06-1983 | Prüfer MARTIN A E W |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82